# EUROPEAN PATENT APPLICATION

(11) **EP 4 682 649 A1**
(43) Date of publication of application: **21.01.2026**
(21) Application number: 24189697.6
(22) Date of filing: 19.07.2024
(51) Int. Cl.: G05B 19/042, G05B 19/418, G06F 8/10, G06F 8/35, G06F 30/13, G06F 30/27, G06F 111/20

(54) **A METHOD AND SYSTEM FOR GENERATING AN ENGINEERING PROJECT FOR AN INDUSTRIAL PLANT**

(71) Applicant: Siemens Aktiengesellschaft, 80333 München (DE)
(72) Inventor: Sahu, Sukalyan, 560100 Bangalore, Karnataka (IN)
(74) Representative: Isarpatent

(57) **Abstract**

A method for the automatic generation of an engineering project tailored for industrial plant (106) applications is disclosed. The method comprises determining a plurality of engineering objects (108A-N) within an industrial plant (106) based on analysis of a technical commissioning document. The method further comprises determining from a plurality of metadata tags, one or more metadata tags associated with the plurality of engineering objects (108A-N). A specific subset of low-code models is then selected from a plurality of Low-code models. Each of the plurality of Low-code models are configured to generate a plurality of object configurations by analyzing the determined one or more metadata tags. The method further comprises generating the engineering project based on the plurality of object configurations.

## Description

The present invention relates to a method and system, in particular a computer-aided method, for automated generation of an engineering project for an industrial plant.

The engineering and commissioning of automation projects for industrial plants, such as chemical plants, refineries, and power plants, involve complex and multifaceted processes that demand meticulous planning and design. These projects typically encompass a vast number of field-level objects, including machineries like motors, rotors, mixers, furnaces, valves, and heating/cooling systems, as well as Programmable Logic Controllers (PLCs), Personal Computers (PCs), network cables, routers, energy meters, sensors, actuators, and more. The scale of these objects can range from hundreds to thousands, depending on the size of the industry.

Traditionally, the process of configuring these engineering objects is manual, requiring significant effort and time. Extracting and understanding the information from extensive technical commissioning documents necessitates expert-level skills, which are often rare and time-consuming to acquire. Given the complexity and volume of information involved, the manual approach is prone to human errors, which can lead to critical issues such as plant downtime, safety concerns, and substantial production losses. The current commissioning process is inherently inefficient and labor-intensive, presenting several key challenges.

Firstly, manually extracting information from extensive technical documents is time-consuming and requires substantial effort. Secondly, understanding and interpreting technical plant documents demand a high level of expertise, which is not always readily available and takes considerable time to develop. Thirdly, the manual commissioning process is susceptible to errors due to inattention to minute details, potentially leading to plant downtime and safety risks. Lastly, incorrect commissioning results in inefficient plant activities, reducing overall production and operational effectiveness.

In recent years, advancements in artificial intelligence (Al) and machine learning (ML) have demonstrated significant potential in automating various aspects of engineering and project management. However, the integration of these technologies into the engineering domain for the automatic generation of industrial plant projects remains underexplored. Existing solutions often lack the capability to comprehensively analyze complex technical documents and accurately generate engineering configurations that are both efficient and reliable.

Given the pressing need for a more efficient, accurate, and automated approach to generating engineering projects for industrial plants, there is a clear opportunity for innovation. An ideal solution would leverage Al and ML technologies to analyze technical documents, identify engineering objects, generate configurations, and simulate and validate the projects before deployment. This would significantly reduce the time and effort required to design and implement industrial plants, while also minimizing the risk of errors and enhancing overall project efficiency.

In light of above, there exists a need for an efficient method and system for automated generation of an engineering project for an industrial plant.

The object of the invention is achieved by a computer implemented method of automatically generating an engineering project for an industrial plant.

The method is executed by an automation module which comprises computer-readable code that can be executed by a processing unit to implement the method. This automation module is a sophisticated software component designed to streamline the entire process of generating the engineering project for the industrial plant. The computer-readable code within the module is meticulously crafted to perform a series of complex tasks, including the analysis of technical commissioning documents, identification of engineering objects, determination of metadata tags, and selection and application of appropriate Low-code models on metadata tags.

The processing unit, is a central processing unit (CPU), a graphics processing unit (GPU), or a specialized Al accelerator, executes the computer-readable code to carry out tasks efficiently and accurately. The automation module interfaces with various data sources, including servers that store metadata tags and mapping tables, to retrieve and process the necessary information. It utilizes advanced algorithms, including deep learning models and reinforcement learning techniques, to analyze the data and make intelligent decisions regarding the configuration of engineering objects.

The engineering project, in this context, refers to a technical document which comprises comprehensive planning, design, and configuration of various components and systems required for the construction, operation, and maintenance of an industrial facility. The engineering project includes the detailed specifications and layouts for machinery, electrical systems, control systems, piping, instrumentation, and other essential infrastructure. For example, the engineering project for a chemical plant might involve the design of reactors, distillation columns, heat exchangers, pumps, and control systems to ensure the efficient and safe production of chemicals.

The industrial plant, on the other hand, is a large-scale facility where industrial processes are carried out to manufacture goods or process raw materials. Industrial plants can vary widely in function and complexity, ranging from power plants, which generate electricity, to refineries, which process crude oil into usable products like gasoline and diesel, to manufacturing plants that produce consumer goods. Each type of industrial plant has a unique set of requirements and challenges, necessitating a tailored engineering project to address its specific needs. For instance, a power plant might require detailed engineering for turbines, boilers, generators, and cooling systems, while a food processing plant would focus on sanitary design, refrigeration systems, and automated packaging lines.

Advantageously, by automating the generation of these engineering projects, the method streamlines traditionally labor-intensive and error-prone process, ensuring greater accuracy, efficiency, and safety in the development and operation of industrial plants.

The method comprises determining a plurality of engineering objects in an industrial plant based on an analysis of a technical commissioning document. The plurality of engineering objects refer to various components and systems which are essential for the construction, operation, and maintenance of the industrial plant. The plurality of engineering objects include machinery such as motors, rotors, mixers, furnaces, valves, and heating and cooling systems, as well as control systems like Programmable Logic Controllers (PLCs), sensors, actuators, network cables, routers, energy meters, and more. For example, in a chemical plant, the plurality of engineering objects encompasses reactors, distillation columns, heat exchangers, and control valves, all of which are critical for the plant's operation.

The technical commissioning document is a comprehensive set of detailed diagrams and schematics that provide the necessary information for identifying and configuring these engineering objects. Examples of the technical commissioning document include Piping and Instrumentation Diagrams (P&ID), which illustrate the piping and related components of a physical process flow; Electrical Schematics, which depict the electrical circuits and connections within the plant; and Process Flow Diagrams (PFD), which outline the flow of materials and energy through the plant's processes. For instance, a P&ID would show the layout of pipes, valves, and instrumentation in a refinery, while an Electrical Schematic would detail the wiring and electrical connections for the plant's machinery and control systems.

For example, when the automation module receives a technical commissioning document, the automation module uses optical character recognition (OCR) and natural language processing (NLP) techniques to extract relevant data. The extracted data is then processed to identify engineering objects and assign appropriate metadata tags.

By analyzing the technical commissioning document, the method ensures that the plurality of engineering objects are accurately identified and configured, thereby streamlining the traditionally labor-intensive and error-prone process of project generation. Thus the approach guarantees greater accuracy, efficiency, and safety in the development and operation of industrial plants.

In one example, the method further comprises extracting a plurality of data items by application of the optical character recognition algorithm on the technical commissioning document. The plurality of data items refers to the individual pieces of information extracted from the technical commissioning documents, such as Piping and Instrumentation Diagrams (P&ID), Electrical Schematics, and Process Flow Diagrams (PFD). The plurality of data items include details about the plurality of engineering objects, such as their type, specifications, connections, and operational parameters.

The method further comprises classifying the extracted plurality of data items into a plurality of categories of engineering objects by implementation of a data classification procedure on the extracted plurality of data items. The plurality of categories are defined groups or classes into which the plurality of engineering objects may be organized based on characteristics, functions, or roles of the plurality of engineering objects within the industrial plant. For example, categories might include pumps, valves, heat exchangers, sensors, and control systems.

The method further comprises mapping the categorized plurality of data items to a set of standardized engineering objects. The set of standardized engineering objects are predefined templates or models that represent typical engineering objects used in industrial plants. The plurality of standardized engineering objects include detailed specifications, operational parameters, and design criteria that conform to industry standards. For instance, a standardized pump object might include attributes such as flow rate, pressure rating, material composition, and power requirements.

In one example, the mapping is achieved by comparing the attributes of the data items with the specifications of the set of standardized engineering objects. For example, if a data item describes a pump with a specific flow rate and pressure rating, the data item is mapped to a standardized pump object that matches these attributes. The mapping ensures that each data item is accurately represented by a standardized engineering object, facilitating consistency and uniformity in the engineering project.

By classifying the extracted data items into categories and mapping them to standardized engineering objects, the method ensures a structured and consistent approach to generating the engineering project. This approach enhances the accuracy, efficiency, and reliability of the project, ultimately improving the productivity and safety of the industrial plant.

The method further comprises determining, from a plurality of metadata tags, one or more metadata tags associated with the plurality of engineering objects. The plurality of metadata tags are descriptive labels or identifiers that provide additional information about the plurality of engineering objects, facilitating categorization, retrieval, and configuration of the plurality of engineering objects. The plurality of metadata tags includes attributes such as object type, function, specifications, location, and operational parameters. For example, a metadata tag for a motor might include details such as its horsepower, voltage, manufacturer, and maintenance schedule.

The one or more metadata tags are determined based on the plurality of engineering objects which are determined to be within the industrial plant. In one example, the plurality of metadata tags are then stored in a server and can be downloaded by the processing unit when needed. In the server, a mapping table is utilized to link the plurality of metadata tags to a corresponding list of engineering objects, ensuring that each engineering object is accurately described and categorized. Thus, the method comprises using the mapping table to determined the one or more metadata tags which are associated with the plurality of engineering objects. The mapping table is manually generated by one or more users.

For instance, if the plurality of engineering objects determined from the technical commissioning documents comprises a series of valves, then the determined one or more metadata tags for include a type (e.g., ball valve, gate valve), a size, a type of material, a pressure rating, and a control method associated with the series of valves.

By determining and utilizing metadata tags, the method ensures that each engineering object is precisely identified and described, streamlining a configuration process and enhancing the accuracy and efficiency of generation of the engineering project. Thus, the method minimizes risk of errors and ensures that all components are correctly integrated into the industrial plant's design and operation.

The method further comprises applying a deep learning model on the determined plurality of engineering objects and the one or more metadata tags associated with the determined plurality of engineering objects. The deep learning model is an advanced type of machine learning algorithm that uses neural networks with multiple layers to analyze and interpret data associated with the determined plurality of engineering objects and the one or more metadata tags. In the method, the deep learning model is configured to process the plurality of engineering objects and the one or more metadata tags to determine a set of low-code models from a plurality of low-code models.

The plurality of low-code models consists of specialized algorithms designed to generate configurations for specific engineering objects based on key performance indicators (KPIs) such as efficiency, reliability, safety, and cost-effectiveness. For example, a low-code model is tailored to optimize the configuration of a motor for energy efficiency, while another low-code model is focused on ensuring the reliability of a valve under high-pressure conditions.

A low-code model refers to a development approach that requires minimal hand-coding, allowing users to create applications and algorithms through graphical interfaces and pre-built components. This approach significantly accelerates the development process and reduces the complexity involved in coding intricate algorithms from scratch. In the context of industrial engineering, low-code models enable engineers to quickly develop and deploy sophisticated configurations for various engineering objects without extensive programming knowledge.

For instance, a low-code model for optimizing the configuration of a motor might include a drag- and-drop interface where users can select parameters such as voltage, current, and load conditions. The model then uses pre-defined algorithms to calculate the optimal settings for energy efficiency. Similarly, a low-code model for a valve under high-pressure conditions might allow users to input pressure ratings, material specifications, and flow rates. The model would then generate a configuration that ensures the valve's reliability and safety under specified conditions.

These low-code models leverage advanced algorithms and machine learning techniques to provide accurate and efficient configurations. They are designed to be user-friendly, enabling engineers to focus on critical decision-making and optimization tasks rather than getting bogged down by complex coding requirements. By utilizing low-code models, the engineering system can rapidly adapt to changing requirements and deliver high-quality configurations that meet stringent performance criteria.

The deep learning model determines the set of Low-code models by analyzing the metadata tags and the characteristics of the engineering objects. The deep learning model uses the information to match each object with the most suitable Low-code model from the available pool. The deep learning model is trained using a large dataset that includes historical data, technical specifications, and performance metrics of similar engineering projects. A training process of the deep learning model involves feeding the deep learning model with input data and adjusting one or more training parameters to minimize prediction errors, thereby enhancing an accuracy of the deep learning model.

Examples of models that can be used to implement the deep learning model include Convolutional Neural Networks (CNNs), Recurrent Neural Networks (RNNs), and Transformer models. CNNs are particularly effective for image and spatial data analysis, making them suitable for analyzing Piping and Instrumentation Diagrams (P&ID) and Process Flow Diagrams (PFD). RNNs are adept at handling sequential data, which can be useful for time-series analysis in operational data. Transformer models, known for their attention mechanisms, excel in natural language processing tasks, making them ideal for parsing and understanding technical commissioning documents.

The plurality of low-code models consists of specialized algorithms designed to generate configurations for specific engineering objects based on key performance indicators (KPIs) such as efficiency, reliability, safety, and cost-effectiveness. Examples of models that can be used to implement these Low-code models include Decision Trees, Support Vector Machines (SVMs), and Gradient Boosting Machines (GBMs). Decision Trees can be used to make rule-based decisions for configuring simple engineering objects like valves. SVMs are effective for classification tasks, such as determining the optimal settings for sensors. GBMs are powerful for regression tasks, such as predicting the performance of complex machinery like heat exchangers.

Each Low-code model is trained using specialized datasets that focus on their respective domains. For instance, a Decision Tree model designed for configuring valves would be trained on a dataset that includes various valve types, sizes, materials, and operational conditions. The training process involves feeding the model with input data and adjusting its parameters to minimize prediction errors, thereby enhancing its ability to make accurate decisions. An SVM model for sensors would be trained on data related to sensor types, measurement ranges, and environmental conditions, ensuring it can classify the optimal settings for different scenarios. A GBM model for heat exchangers would be trained on data related to thermal performance, material properties, and fluid dynamics, enabling it to predict the best configuration for maximizing efficiency and reliability. Each low-code model of the plurality of low-code models is configured to generate a plurality of object configurations, based on analysis of the one or more metadata tags.

The plurality of metadata tags comprises information associated with dependency of one or more engineering objects with other engineering objects of the plurality of engineering objects. Dependencies are relationships that indicate how an operation or a configuration of one engineering object relies on or influences another engineering object of the plurality of engineering objects. The dependencies are crucial for understanding the interconnected nature of the plurality of engineering objects within the industrial plant.

For example, in a chemical plant, a reactor depends on a heat exchanger to maintain a correct temperature for a chemical reaction. Similarly, a pump depends on a motor to provide the necessary mechanical power for fluid movement. Thus, such dependencies ensure that the various components work together harmoniously to achieve the desired operational outcomes.

The one or more metadata tags represent dependencies by including detailed information about a relationships between the plurality of engineering objects. For instance, a metadata tag for a pump includes attributes indicating a dependency on a specific motor, such as the motor's model number, power rating, and operational status.

By analyzing the one or more metadata tags, the method identifies and maps out the dependencies, ensuring that the plurality of engineering objects are configured and integrated correctly. The one or more metadata tags are analyzed by application of an optical character recognition algorithm and a natural language processing algorithm on the one or more metadata tags.

The method comprises generating a plurality of dependency links between the plurality of engineering objects based on an analysis of the one or more metadata tags. The plurality of dependency links are indicative of the dependencies between the plurality of metadata tags. These dependency links are generated by systematically analyzing the metadata tags to identify the relationships and interdependencies among the engineering objects.

To generate these dependency links, the method employs a plurality of algorithms designed to parse and interpret the metadata tags. Algorithms such as Depth-First Search (DFS) and Breadth-First Search (BFS) can be used to traverse the one or more metadata tags and identify dependencies. For example, DFS can be employed to explore all possible paths between the plurality of engineering objects, ensuring that all dependencies are captured. BFS, on the other hand, can be used to identify the shortest path or the most direct dependencies between objects.

Another effective algorithm is the Dijkstra's algorithm, which is particularly useful for finding the shortest paths between nodes in a graph, where nodes represent engineering objects and edges represent dependency links. For instance, in a chemical plant, the metadata tags for a reactor might indicate dependencies on a heat exchanger and a control valve. By applying Dijkstra's algorithm, the method can generate dependency links that map out the shortest and most efficient path between these objects, ensuring that the reactor is correctly configured with its dependent components.

The Bellman-Ford algorithm is another useful tool, especially when dealing with graphs that may have negative weights, representing constraints or limitations in the dependencies. This algorithm can help in identifying the most feasible paths, even in complex scenarios where certain dependencies might impose restrictions.

By employing these algorithms, the method systematically generates the plurality of dependency links that accurately represent the relationships and interdependencies among the plurality of engineering objects. The plurality of dependency links are then used to create a comprehensive map of the dependencies between the plurality of engineering objects, ensuring that each engineering object of the plurality of engineering objects is correctly configured and integrated within the engineering project.

A graph-based algorithm is a computational method used to analyze and process data structured as graphs, where nodes represent entities (in this case, engineering objects) and edges represent relationships or dependencies between these entities. Examples of graph-based algorithms include Dijkstra's algorithm for shortest path determination, PageRank for ranking web pages, and the Bellman-Ford algorithm for handling graphs with negative weights. These algorithms are trained using historical data and predefined rules to understand the relationships and dependencies between different objects, ensuring accurate analysis and decision-making.

Dependency links are connections that represent the interdependencies between engineering objects. These links are extracted from the metadata tags, which contain information about how each object interacts with others. For instance, a pump might be dependent on a motor for its operation, and this relationship would be represented as a dependency link in the graph.

The hierarchy in the method is represented by ordering the engineering objects based on their importance, as indicated by the generated weights and dependency links. The graph-based algorithm processes these weights and links to determine the optimal sequence and structure of the objects. For example, in a chemical plant, the hierarchy might start with the primary reactor, followed by heat exchangers, pumps, and control valves, each ordered based on their criticality and dependencies.

The method comprises generating a plurality of weights based on the analysis of the one or more metadata tags. The plurality of weights are indicative of an importance of each engineering object of the plurality of engineering objects. The method further comprises applying a graph-based algorithm to the plurality of weights and the plurality of dependency links, to order the plurality of engineering objects according to a significance and interdependencies of the plurality of engineering objects. This ordered structure forms the hierarchy associated with the engineering project, ensuring that the most critical and influential objects are prioritized and correctly integrated into the overall design.

The graph-based algorithm is a computational method used to analyze and process data structured as graphs, where nodes represent entities (in this case, the plurality of engineering objects) and edges (in this case, the plurality of dependency links) represent relationships or dependencies between the plurality of engineering objects. Examples of graph-based algorithms include Dijkstra's algorithm for shortest path determination, PageRank for ranking web pages, and the Bellman-Ford algorithm for handling graphs with negative weights. The plurality of graph based algorithms are trained using historical data and predefined rules to understand the relationships and dependencies between the plurality of engineering objects, ensuring accurate analysis and decision-making.

For example, in a power plant, the hierarchy prioritizes engineering objects such as turbines and generators at the top, followed by boilers, cooling systems, and auxiliary equipment, each ordered based on their operational importance and dependencies. Thus, the hierarchy ensures that the engineering project is efficiently organized, minimizing potential issues and enhancing the overall reliability and performance of the industrial plant. By leveraging graph-based algorithms and accurately determining weights and dependency links, the method ensures a well-organized and efficient hierarchy for the engineering project.

The method further comprises generating the plurality of object configurations for the plurality of engineering objects. It is noted that the plurality of object configurations are detailed specifications and settings that define how each engineering object should be arranged, connected, and operated within the industrial plant. The plurality of object configurations include parameters such as dimensions, material properties, operational settings, control logic, and safety protocols.

The plurality of object configurations are generated by executing the determined set of low-code models on the one or more metadata tags. Each Low-code model is specialized to optimize the configuration of a specific type of engineering object based on key performance indicators (KPIs) such as efficiency, reliability, safety, and cost-effectiveness. For example, an Low-code model designed for configuring pumps analyzes data related to flow rates, pressure requirements, and energy consumption to generate an optimal configuration that maximizes efficiency and minimizes operational costs.

During execution, the determined set of low-code models process the one or more metadata tags, the plurality of weights and the plurality of dependency links associated with each engineering object. For instance, an Low-code model for heat exchangers might use thermal performance data and fluid dynamics principles to configure the heat exchanger for optimal heat transfer efficiency and minimal pressure drop.

In a practical example, consider a chemical plant where an Low-code model for control valves analyzes data on fluid flow rates, pressure conditions, and chemical compatibility. The Low-code model generates a configuration that specifies the valve type, size, material, and control settings to ensure precise flow regulation and chemical resistance. Similarly, an Low-code model for sensors might analyze environmental conditions and measurement requirements to configure the sensors for accurate and reliable data acquisition.

By executing the determined set of Low-code models, the method ensures that each engineering object is configured to meet its specific operational requirements and constraints. This approach leverages the strengths of artificial intelligence to optimize the design and integration of engineering objects, enhancing the overall efficiency, reliability, and safety of the industrial plant.

The method further comprises applying a large language model (LLM) to generate the engineering project based on the plurality of object configurations. A large language model (LLM) is an advanced type of artificial intelligence that uses deep learning techniques to understand and generate human-like text. These models are capable of processing and synthesizing vast amounts of information, making them well-suited for complex tasks such as generating detailed engineering projects.

The LLM is trained on a plurality of training data sets, which include extensive information representative of various industrial plant operations and different types of industrial plants. This training process involves feeding the model with a diverse range of documents, technical specifications, operational manuals, historical project data, and industry standards. The model learns to recognize patterns, relationships, and dependencies within this data, enabling it to generate coherent and contextually accurate engineering project documentation.

For example, when generating an engineering project for a power plant, the LLM analyzes a set of object configurations for turbines, generators, boilers, and cooling systems. The LLM uses trained knowledge to generate detailed engineering plans, including layout diagrams, operational protocols, and safety measures. The LLM ensures that all components are correctly integrated and that the project adheres to industry standards and best practices.

By applying a large language model to generate the engineering project, the method leverages the advanced capabilities of Al to produce accurate, detailed, and contextually relevant project documentation. This approach enhances the efficiency, reliability, and comprehensiveness of the engineering project, ultimately improving the productivity and safety of industrial plant operations.

The method further comprises generating the engineering project based on the plurality of object configurations. The method is executed entirely by a processing unit without manual intervention, ensuring efficiency, accuracy, and consistency. The processing unit leverages advanced algorithms and computational techniques to synthesize the plurality of object configurations into a comprehensive engineering project.

To generate the engineering project, the method comprises aggregating the plurality of object configurations, which include detailed specifications and settings for each engineering object of the plurality of engineering objects. The method further comprises organizing the plurality of object configurations into a coherent structure, based on the plurality of weights and the plurality of dependency links. Thus, all dependencies and interconnections between the plurality of engineering objects are accurately represented. For example, in a chemical plant, the processing unit integrates configurations for reactors, heat exchangers, pumps, and control valves, ensuring that each component is correctly positioned and connected according to the specified dependencies.

The processing unit employs data integration techniques to compile various elements of the project, such as layout diagrams, wiring schematics, and process flow diagrams. The processing unit is configured to use the one or more metadata tags and plurality of dependency links to ensure that the plurality of engineering objects are correctly aligned and that the overall system architecture adheres to industry standards and best practices. For instance, in a power plant, the processing unit generates detailed layout diagrams that show the precise placement of turbines, generators, boilers, and cooling systems, along with their interconnections and control systems.

The method further comprises generating a simulation instance for the industrial plant. A simulation instance is a virtual representation of the industrial plant, created to mimic its physical and operational characteristics accurately. The simulation instance is implemented using advanced simulation software that models the plurality of engineering objects and the plurality of object configurations based on a specification of the generated engineering project.

The simulation instance is generated by inputting the detailed object configurations and dependencies into a simulation software. The simulation software constructs a virtual environment that replicates real-world conditions of the industrial plant, including physical layout, operational parameters, and control systems. For example, in a power plant, the simulation instance would include virtual models of turbines, generators, boilers, and cooling systems, along with their interconnections and control logic.

The method further comprises simulating a deployment of the generated engineering project in the industrial plant by executing one or more functionalities of the engineering project on the generated simulation instance. Thus, the virtual plant under various operational scenarios to test how the engineering project performs. The simulation software executes the control algorithms, operational protocols, and safety measures defined in the engineering project, allowing for a thorough evaluation of its functionality.

The method further comprises validating a functionality of the engineering project within the simulation instance. The functionality of the engineering project is validated against a plurality of test cases. Validation is performed by comparing the simulation results with a plurality of predefined test cases that represent typical and extreme operational conditions. Examples of the plurality of predefined test cases include normal operation, startup and shutdown sequences, emergency scenarios, and performance under varying loads and environmental conditions. For instance, in a chemical plant, the plurality of predefined test cases might include scenarios such as a sudden increase in feedstock flow, equipment failure, or a power outage.

The validation process involves monitoring key performance indicators (KPIs) such as efficiency, reliability, safety, and compliance with industry standards. The simulation software generates detailed reports on the performance of the engineering project, highlighting any deviations or issues that need to be addressed. If the project meets all the test case criteria, it is considered successfully validated.

The method further comprises deploying the engineering project in the industrial plant only after successful validation of the generated engineering project. Deployment involves transferring the validated engineering project from the simulation environment to the actual industrial plant. This process includes configuring the physical components, implementing the control systems, and setting up the operational protocols as defined in the project. For example, in a manufacturing plant, deployment would involve installing machinery, setting up control panels, and programming the automation systems according to the validated project specifications.

By generating a simulation instance, simulating the deployment, validating against test cases, and deploying only after successful validation, the method ensures a high level of accuracy and reliability in the engineering project. This approach minimizes risks, enhances operational efficiency, and ensures the safety and productivity of the industrial plant.

The object of the present invention is also achieved by an engineering system for generation of an engineering project for an industrial plant. The engineering system comprises one or more processor(s) and a memory coupled to the processor. The memory comprises an automation module stored in the form of machine-readable instructions executable by the processor. The automation module is configured for performing the method as described above.

The object of the present invention is also achieved by an industrial environment. The industrial environment comprising an engineering system, a industrial plant comprising one or more physical components and one or more client devices communicatively coupled to the engineering system and the industrial plant. The engineering system is configured to perform the above described method steps.

The object of the present invention is also achieved by a computer-program product, having machine-readable instructions stored therein, that when executed by a processing unit is configured to perform the above described method steps.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of an industrial environment capable of automatic generation of an engineering project for an industrial plant, according to an embodiment of the present invention;
- FIG 2: is a block diagram of an engineering system, such as those shown in FIG. 1, in which an embodiment of the present invention can be implemented;
- FIG 3: is a block diagram of an automation module, such as those shown in FIG 2, in which an embodiment of the present invention can be implemented; and
- FIG 4: is a process flowchart illustrating an exemplary method of automatically generating an engineering project for an industrial plant, according to an embodiment of the present invention.

Various embodiments are described with reference to the drawings, wherein like reference numerals are used to re-fer the drawings, wherein like reference numerals are used to refer to like elements throughout. In the following de-scription, for the purpose of explanation, numerous specific details are set forth in order to provide thorough understanding of one or more embodiments. It may be evident that such embodiments may be practiced without these specific details.

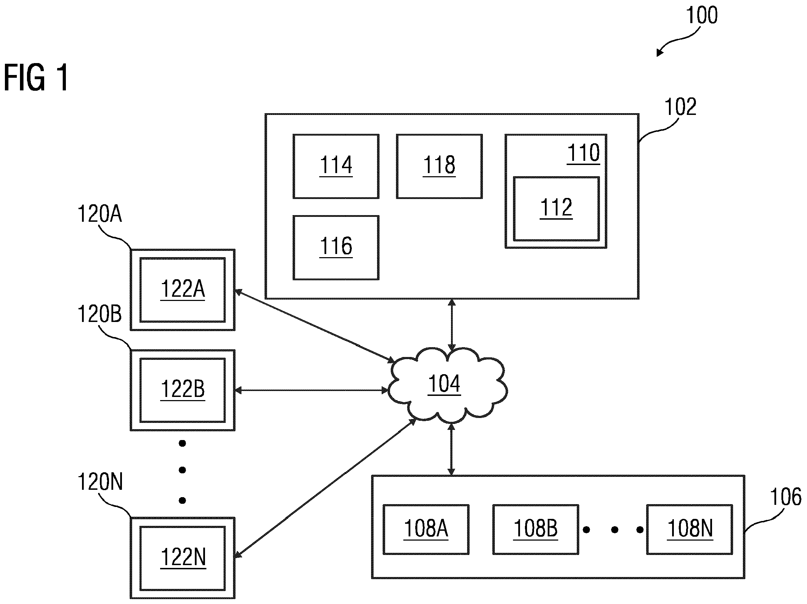

FIG 1 is a block diagram of an industrial environment 100 capable of automatic generation of an engineering project for an industrial plant 106, according to an embodiment of the pre-sent invention. In FIG 1, the industrial environment 100 includes an engineering system 102, the industrial plant 106 and one or more client devices 120A-N. As used herein, "industrial environment" refers to a processing environment comprising configurable computing physical and logi-cal resources, for example, networks, servers, storage, applications, services, etc., and data distributed over a platform, such as cloud computing platform. The industrial environment 100 provides on-demand network access to a shared pool of the configurable computing physical and logical resources. The engineering system 102 is communicatively connected to a industrial plant via the network 104 (such as Local Area Network (LAN), Wide Area Network (WAN), Wi-Fi, Internet, any short range or wide range communication). The engineering system 102 is also connected to the one or more client devices 120A-N via the network 104.

The industrial plant 106 comprises a plurality of engineering objects 108A-N. Examples of the plurality of engineering objects 108A-N may include, for example, a programmable logic controller, one or more field devices, or any other automation devices. Examples of the one or more field devices includes but is not limited to, motors, rotors, mixers, furnaces, heaters, refrigerators, control valves, pumps, and actuators. Examples of the industrial plant 106 includes but is not limited to a power plant, a manufacturing plant, and a water treatment plant.

The plurality of engineering objects 108A-N are operated by execution of a plurality of programming blocks in a controller device of the industrial plant 106. The controller device is configured to execute the plurality of programming blocks and to control the plurality of engineering objects 108A-N 108A-N to achieve a specific objective in the industrial plant 106. In one example, the controller device is a programmable logic controller or a cloud based computing platform.

Each engineering object of the plurality of engineering objects 108A-N has a plurality of properties which are described in a technical commissioning document which are a plurality of documents such as connection schemas, bill of materials, and product manuals. The plurality of properties includes but is not limited to information associated with compatibility of each engineering objects with other engineering objects of the plurality of engineering objects 108AN, temperature rating, pressure rating, a function in the industrial plant 106, configuration settings associated with the plurality of engineering objects 108A-N and residual life of the plurality of engineering objects 108A-N. The plurality of documents comprises process related documents like process operation description document, process flowchart, and process control philosophy, piping and instrumentation diagrams, and non-process documents such as bill of materials, brochures, statement of procedure documents, and product manuals. Furthermore, the plurality of documents comprises information associated with a plurality of dependencies of each property of the plurality of properties with each other. The plurality of documents comprises paper based documents as well as electronic documents.

The engineering system 102 is connected to the plurality of engineering objects 108A-N in the industrial plant 106 via the network 104. The plurality of engineering objects 108A-N may be connected to each other or several other components (not shown in FIG 1) via physical connections. The physical connections may be through wiring be-tween the plurality of engineering objects 108A-N. Alternatively, the plurality of engineering objects 108A-N is connected via non-physical connections (such as Internet of Things (IOT)) and 5G networks. Although, FIG 1 illustrates the engineering system 102 connected to one industrial plant 106, one skilled in the art can envision that the engineering system 102 can be connected to several industrial plants located at different geographical locations via the network 104.

The one or more client devices 120A-N may be a desktop computer, laptop computer, tablet, smart phone and the like. Each of the one or more client devices 120A-N is provided with an engineering tool 122A-N for generating and/or editing the plurality of engineering projects. For example, the one or more client devices 120A-N can access the engineering system 102 for automatically generating one or more engineering projects. The one or more client devices 120A-N can access cloud applications (such as providing performance visualization of the plurality of engineering objects 108A-N via a web browser). Throughout the specification, the terms "client device" and "user device" are used interchangeably.

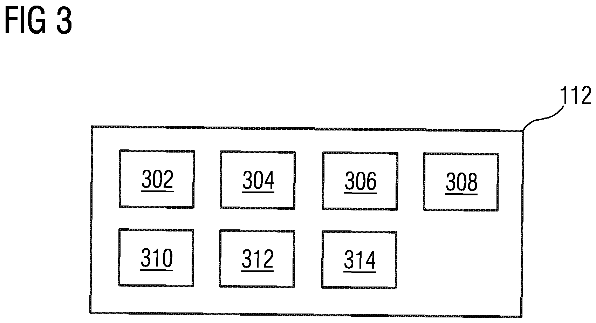

The engineering system 102 may be a standalone server deployed at a control station or may be a remote server on a cloud computing platform. In a preferred embodiment, the engineering system 102 may be a cloud-based engineering system. The engineering system 102 is capable of delivering applications (such as cloud applications) for managing the industrial plant 106 comprising the plurality of engineering objects 108A-N. The engineering system 102 may comprise a platform 110 (such as a cloud computing platform), an automation module 112, a server 114 including hardware resources and an operating system (OS), a network interface 116 and a database 118. The network interface 116 enables communication between the engineering system 102, the industrial plant, and the one or more client de-vice(s) 120A-N. The interface (such as cloud interface)(not shown in FIG 1) may allow the engineers at the one or more client device(s) 120A-N to access the one or more engineering projects stored at the engineering system 102 and perform one or more actions on the one or more engineering projects as same instance. The server 114 may include one or more servers on which the OS is installed. The servers 114 may comprise one or more processors, one or more storage devices, such as, memory units, for storing data and machine-readable instructions for example, applications and application programming interfaces (APIs), and other peripherals required for providing computing (such as cloud computing) functionality. The platform 110 enables functionalities such as data reception, data processing, data rendering, data communication, etc. using the hardware resources and the OS of the servers 114 and delivers the aforementioned services using the application programming interfaces deployed therein. The platform 110 may comprise a combination of dedicated hardware and software built on top of the hardware and the OS. The platform 110 may further comprise an automation module 112 configured for generating ethe one or more engineering projects. The automation module 112 further comprises a knowledge repository 126 comprising at least one name graph. Details of the automation module 112 is explained in FIG. 3.

The plurality of engineering projects comprises engineering projects associated with a plurality of domains. Examples of the plurality of domains includes, but is not limited to a chemical domain, a mechanical domain, a manufacturing domain, and an energy domain. Furthermore, each engineering project of the plurality of engineering pro-jects comprises information associated with a plurality of variants of the plurality of engineering objects. Each variant of the plurality of variants differ from each other in voltage rating, power rating, year of manufacturing, vibration resistance, and water resistance.

Each engineering project of the plurality of engineering projects comprises at least a plurality of programming blocks, a piping and instrumentation diagram and a control philosophy which comprise configuration information associated with the plurality of engineering objects. The configuration information comprises information indicative of a manner in which the plurality of engineering objects can be connected and operated to achieve a specific objective in the industrial plant 106. The specific objective is as-sociated with a plurality of key performance indicators of the industrial plant 106. Example of the plurality of key performance indicators include but is not limited to an energy consumption of the industrial plant 106, a water usage of the industrial plant 106, a turnover time of the industrial plant 106 and a operation cost of the industrial plant 106. Each engineering project of the plurality of engineering project is configured to cause the plurality of engineering object to function and achieve a specific combination of key performance indicators of the plurality of key performance indicators. In one example, each engineering project of the plurality of engineering projects comprises a plurality of documents which contain information about the manner in which the plurality of engineering objects are connected and operated to achieve the specific objective in the industrial plant 106.

The plurality of documents comprises information about a plurality of properties of the plurality of engineering objects. Examples of the plurality of documents include but is not limited to a connection schema, a bill of mate-rials, and a product manual associated with the plurality of engineering objects. The plurality of properties includes but is not limited to information associated with compatibility of each engineering objects with other engineering objects of the plurality of engineering objects. Furthermore, the plurality of properties comprises a temperature rating, a pressure rating, and a function of each engineering object in the industrial plant 106. The plurality of properties further comprises configuration set-tings associated with the plurality of engineering objects 108A-N and residual life of the plurality of engineering objects 108A-N. The plurality of documents comprises process related documents like process operation description document, process flowchart, and process control philosophy, piping and instrumentation diagrams, and non-process documents such as bill of materials, brochures, statement of procedure documents, and product manuals. Furthermore, the plurality of documents comprises information associated with a plurality of dependencies of each property of the plurality of properties with each other. The plurality of documents comprises paper based documents as well as electronic documents.

The plurality of engineering projects further comprises a plurality of programming blocks. The plurality of programming blocks comprises programming code which is executed by a controller device in the industrial plant 106 to con-trol operations of the plurality of engineering objects. In other words, the plurality of engineering objects are connected in the industrial plant 106 based on the piping and instrumentation diagram. The controller device, such as a programmable logic controller, is configured to exe-cute the plurality of programming blocks to control the plurality of engineering objects 108A-N to achieve a specific objective in the industrial plant 106.

Thus, in other words, each engineering project of the plurality of engineering projects comprises configuration in-formation to configure the plurality of engineering objects to operate and achieve a specific value for each of the plurality of key performance indicators of the industrial plant 106. Information associated with the plurality of key performance indicators are stored as a textual document in each of the plurality of engineering projects.

The database 118 stores the information relating to the industrial plant 106 and the one or more client device(s) 120A-N. The database 118 is, for example, a structured query language (SQL) data store or a not only SQL (NoSQL) data store. In an exemplary embodiment, the database 118 may be configured as cloud-based database implemented in the industrial environment 100, where computing resources are delivered as a service over the platform 110. The database 118, according to another embodiment of the present invention, is a location on a file system directly accessible by the automation module 112. The database 118 is configured to store engineering project files, engineering programs, object behavior model, parameter values associated with the plurality of engineering objects 108A-N, test results, simulation results, status messages, one or more simulation instances, graphical programs, program logics, program logic patterns, product manuals of the plurality of engineering objects 108A-N and engineering object properties, one or more engineering object blocks, relationship information between the engineering objects, requirements, program update messages and the like.

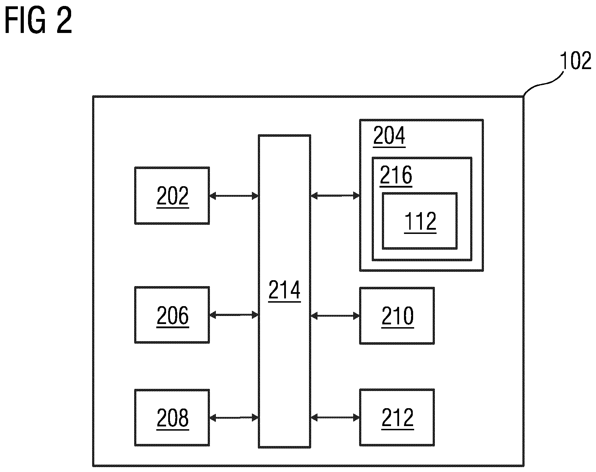

FIG 2 is a block diagram of an engineering system 102, such as those shown in FIG 1, in which an embodiment of the present invention can be implemented. In FIG 2, the engineering system 102 includes a processing unit 202, an accessible memory 204, a storage unit 206, a communication interface 208, an input-output unit 210, a network inter-face 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processing unit 202 may also include embedded controllers, such as generic or programmable logic devices or arrays, application specific integrated circuits, single-chip computers, and the like.

The memory 204 may be non-transitory volatile memory and non-volatile memory. The memory 204 may be coupled for communication with the processing unit 202, such as being a computer-readable storage medium. The processing unit 202 may execute machine-readable instructions and/or source code stored in the memory 204. A variety of ma-chine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes the automation module 112 stored in the form of machine-readable instructions on any of the above-mentioned storage media and may be in communication with and executed by the processor(s) 202.

The automation module 112 is configured to automatically generate an engineering project for the industrial plant 106. The engineering project comprises configuration information associated with the plurality of engineering objects 108A-N in the industrial plant 106. The automation module 112 is a sophisticated software component designed to streamline an entire process of generating the engineering project for the industrial plant 106. The computer-readable code within the module is meticulously crafted to perform a series of complex tasks, including the analysis of technical commissioning documents, identification of engineering objects, determination of metadata tags, and selection and application of appropriate Low-code models on metadata tags.

The engineering project, in this context, refers to a technical document which comprises comprehensive planning, design, and configuration of various components and systems required for the construction, operation, and maintenance of an industrial facility. The engineering project includes the detailed specifications and layouts for machinery, electrical systems, control systems, piping, instrumentation, and other essential infrastructure. For example, the engineering project for a chemical plant might involve the design of reactors, distillation columns, heat exchangers, pumps, and control systems to ensure the efficient and safe production of chemicals.

The industrial plant 106, on the other hand, is a large-scale facility where industrial processes are carried out to manufacture goods or process raw materials. The industrial plant 106 has a plurality of implementations which vary widely in function and complexity, ranging from power plants, which generate electricity, to refineries, which process crude oil into usable products like gasoline and diesel, to manufacturing plants that produce consumer goods. Each type of industrial plant has a unique set of requirements and challenges, necessitating a tailored engineering project to address its specific needs. For instance, a power plant might require detailed engineering for turbines, boilers, generators, and cooling systems, while a food processing plant would focus on sanitary design, refrigeration systems, and automated packaging lines. Advantageously, by automating the generation of the engineering projects, the automation module 112 streamlines traditionally labor-intensive and error-prone process, ensuring greater accuracy, efficiency, and safety in the development and operation of industrial plants.

When executed by the processing unit 202, the automation module 112 causes the processing unit 202 to determine the plurality of engineering objects 108A-N in the industrial plant 106 based on an analysis of a technical commissioning document. The plurality of engineering objects 108A-N refer to various components and systems which are essential for the construction, operation, and maintenance of the industrial plant 106. The plurality of engineering objects include machinery such as motors, rotors, mixers, furnaces, valves, and heating and cooling systems, as well as control systems like Programmable Logic Controllers (PLCs), sensors, actuators, network cables, routers, energy meters, and more. For example, in a chemical plant, the plurality of engineering objects encompasses reactors, distillation columns, heat exchangers, and control valves, all of which are critical for the plant's operation.

The technical commissioning document is a comprehensive set of detailed diagrams and schematics that provide the necessary information for identifying and configuring these engineering objects. Examples of the technical commissioning document include Piping and Instrumentation Diagrams (P&ID), which illustrate the piping and related components of a physical process flow; Electrical Schematics, which depict the electrical circuits and connections within the plant; and Process Flow Diagrams (PFD), which outline the flow of materials and energy through the plant's processes. For instance, a P&ID would show the layout of pipes, valves, and instrumentation in a refinery, while an Electrical Schematic would detail the wiring and electrical connections for the plant's machinery and control systems.

For example, when the automation module 112 receives a technical commissioning document, the automation module uses optical character recognition (OCR) and natural language processing (NLP) techniques to extract relevant data. The extracted data is then processed to identify engineering objects and assign appropriate metadata tags.

By analyzing the technical commissioning document, the automation module 112 ensures that the plurality of engineering objects 108A-N are accurately identified and configured, thereby streamlining the traditionally labor-intensive and error-prone process of project generation. Thus, the approach guarantees greater accuracy, efficiency, and safety in the development and operation of the industrial plant 106.

The automation module 112 further causes the processing unit 202 to extract a plurality of data items from the technical commissioning document by application of the optical character recognition algorithm on the technical commissioning document. The plurality of data items refers to the individual pieces of information extracted from the technical commissioning documents, such as Piping and Instrumentation Diagrams (P&ID), Electrical Schematics, and Process Flow Diagrams (PFD). The plurality of data items includes details about the plurality of engineering objects 108A-N, such as a type, a specification, connections, and operational parameters of the plurality of engineering objects 108A-N.

The automation module 112 further causes the processing unit 202 to classify the extracted plurality of data items into a plurality of categories of engineering objects by implementation of a data classification procedure on the extracted plurality of data items. The plurality of categories are defined groups or classes into which the plurality of engineering objects may be organized based on characteristics, functions, or roles of the plurality of engineering objects within the industrial plant. For example, categories might include pumps, valves, heat exchangers, sensors, and control systems.

The automation module 112 further causes the processing unit 202 to map the categorized plurality of data items to a set of standardized engineering objects. The set of standardized engineering objects are predefined templates or models that represent typical engineering objects used in industrial plants. The plurality of standardized engineering objects includes detailed specifications, operational parameters, and design criteria that conform to industry standards. For instance, a standardized pump object might include attributes such as flow rate, pressure rating, material composition, and power requirements.

In one example, the mapping is achieved by comparing the attributes of the data items with the specifications of the set of standardized engineering objects. For example, if a data item describes a pump with a specific flow rate and pressure rating, the data item is mapped to a standardized pump object that matches these attributes. The mapping ensures that each data item is accurately represented by a standardized engineering object, facilitating consistency and uniformity in the engineering project.

By classifying the extracted data items into categories and mapping them to standardized engineering objects, the method ensures a structured and consistent approach to generating the engineering project. This approach enhances the accuracy, efficiency, and reliability of the project, ultimately improving the productivity and safety of the industrial plant.

The automation module 112 further causes the processing unit 202 to determine, from a plurality of metadata tags, one or more metadata tags associated with the plurality of engineering objects 108A-N. The plurality of metadata tags are descriptive labels or identifiers that provide additional information about the plurality of engineering objects, facilitating categorization, retrieval, and configuration of the plurality of engineering objects. The plurality of metadata tags includes attributes such as object type, function, specifications, location, and operational parameters. For example, a metadata tag for a motor might include details such as its horsepower, voltage, manufacturer, and maintenance schedule.

The one or more metadata tags are determined based on the plurality of engineering objects 108A-N which are determined to be within the industrial plant 106. In one example, the plurality of metadata tags are then stored in the database 118 in a server and can be downloaded by the processing unit 202 when needed. In the database 118, a mapping table is utilized to link the plurality of metadata tags to a corresponding list of engineering objects, ensuring that each engineering object is accurately described and categorized. Thus, the automation module 112 further causes the processing unit 202 to use the mapping table to determine the one or more metadata tags which are associated with the plurality of engineering objects 108A-N. The mapping table is manually generated by one or more users.

For instance, if the plurality of engineering objects 108A-N determined from the technical commissioning documents comprises a series of valves, then the determined one or more metadata tags for the plurality of engineering objects 108A-N includes a type (e.g., ball valve, gate valve), a size, a type of material, a pressure rating, and a control method associated with the series of valves.

By determining and utilizing metadata tags, the automation module 112 ensures that each engineering object is precisely identified and described, streamlining a configuration process and enhancing the accuracy and efficiency of generation of the engineering project. Thus, the automation module 112 minimizes risk of errors and ensures that all components are correctly integrated into a design and operation of the industrial plant 106.

The automation module 112 further causes the processing unit 202 to apply a deep learning model on the determined plurality of engineering objects 108A-N and the one or more metadata tags associated with the determined plurality of engineering objects 108A-N. The deep learning model is an advanced type of machine learning algorithm that uses neural networks with multiple layers to analyze and interpret data associated with the determined plurality of engineering objects 108A-N and the one or more metadata tags. The deep learning model is configured to process the plurality of engineering objects 108A-N and the one or more metadata tags to determine a set of low-code models from a plurality of low-code models.

The plurality of low-code models consists of specialized algorithms designed to generate configurations for specific engineering objects based on key performance indicators (KPIs) such as efficiency, reliability, safety, and cost-effectiveness. For example, a Low-code model is tailored to optimize the configuration of a motor for energy efficiency, while another Low-code model is focused on ensuring the reliability of a valve under high-pressure conditions.

The deep learning model determines the set of Low-code models by analyzing the one or more metadata tags and the characteristics of the plurality engineering objects 108A-N. The deep learning model uses the information to match each object with the most suitable Low-code model from the available pool. The deep learning model is trained using a large dataset that includes historical data, technical specifications, and performance metrics of similar engineering projects. A training process of the deep learning model involves feeding the deep learning model with input data and adjusting one or more training parameters to minimize prediction errors, thereby enhancing an accuracy of the deep learning model.

Examples of models that can be used to implement the deep learning model include Convolutional Neural Networks (CNNs), Recurrent Neural Networks (RNNs), and Transformer models. CNNs are particularly effective for image and spatial data analysis, making them suitable for analyzing Piping and Instrumentation Diagrams (P&ID) and Process Flow Diagrams (PFD). RNNs are adept at handling sequential data, which can be useful for time-series analysis in operational data. Transformer models, known for their attention mechanisms, excel in natural language processing tasks, making them ideal for parsing and understanding technical commissioning documents.

The plurality of low-code models consists of specialized algorithms designed to generate configurations for specific engineering objects based on key performance indicators (KPIs) such as efficiency, reliability, safety, and cost-effectiveness. Examples of models that can be used to implement these Low-code models include Decision Trees, Support Vector Machines (SVMs), and Gradient Boosting Machines (GBMs). Decision Trees can be used to make rule-based decisions for configuring simple engineering objects like valves. SVMs are effective for classification tasks, such as determining the optimal settings for sensors. GBMs are powerful for regression tasks, such as predicting the performance of complex machinery like heat exchangers.

Each Low-code model is trained using specialized datasets that focus on their respective domains. For instance, a Decision Tree model designed for configuring valves would be trained on a dataset that includes various valve types, sizes, materials, and operational conditions. The training process involves feeding the model with input data and adjusting its parameters to minimize prediction errors, thereby enhancing its ability to make accurate decisions. An SVM model for sensors would be trained on data related to sensor types, measurement ranges, and environmental conditions, ensuring it can classify the optimal settings for different scenarios. A GBM model for heat exchangers would be trained on data related to thermal performance, material properties, and fluid dynamics, enabling it to predict the best configuration for maximizing efficiency and reliability. Each low-code model of the plurality of low-code models is configured to generate a plurality of object configurations, based on analysis of the one or more metadata tags.

The plurality of metadata tags comprises information associated with dependency of one or more engineering objects with other engineering objects of the plurality of engineering objects 108A-N. Dependencies are relationships that indicate how an operation or a configuration of one engineering object relies on or influences another engineering object of the plurality of engineering objects. The dependencies are crucial for understanding the interconnected nature of the plurality of engineering objects 108A-N within the industrial plant 106.

For example, in a chemical plant, a reactor depends on a heat exchanger to maintain a correct temperature for a chemical reaction. Similarly, a pump depends on a motor to provide the necessary mechanical power for fluid movement. Thus, such dependencies ensure that the various components work together harmoniously to achieve the desired operational outcomes.

The one or more metadata tags represent dependencies by including detailed information about a relationship between the plurality of engineering objects 108A-N. For instance, a metadata tag for a pump includes attributes indicating a dependency on a specific motor, such as the motor's model number, power rating, and operational status.

By analyzing the one or more metadata tags, the automation module 112 identifies and maps out the dependencies, ensuring that the plurality of engineering objects 108A-N are configured and integrated correctly. The one or more metadata tags are analyzed by application of an optical character recognition algorithm and a natural language processing algorithm on the one or more metadata tags.

The automation module 112 further causes the processing unit 202 to generate a plurality of dependency links between the plurality of engineering objects based on an analysis of the one or more metadata tags. The plurality of dependency links are indicative of the dependencies between the plurality of metadata tags. These dependency links are generated by systematically analyzing the metadata tags to identify the relationships and interdependencies among the engineering objects.

To generate these dependency links, the automation module 112 further causes the processing unit 202 to employ a plurality of algorithms designed to parse and interpret the metadata tags. Algorithms such as Depth-First Search (DFS) and Breadth-First Search (BFS) can be used to traverse the one or more metadata tags and identify dependencies. For example, DFS can be employed to explore all possible paths between the plurality of engineering objects, ensuring that all dependencies are captured. BFS, on the other hand, can be used to identify the shortest path or the most direct dependencies between objects.

Another effective algorithm is the Dijkstra's algorithm, which is particularly useful for finding the shortest paths between nodes in a graph, where nodes represent engineering objects and edges represent dependency links. For instance, in a chemical plant, the metadata tags for a reactor might indicate dependencies on a heat exchanger and a control valve. By applying Dijkstra's algorithm, the method can generate dependency links that map out the shortest and most efficient path between these objects, ensuring that the reactor is correctly configured with its dependent components.

The Bellman-Ford algorithm is another useful tool, especially when dealing with graphs that may have negative weights, representing constraints or limitations in the dependencies. This algorithm can help in identifying the most feasible paths, even in complex scenarios where certain dependencies might impose restrictions.

By employing these algorithms, the automation module 112 systematically generates the plurality of dependency links that accurately represent the relationships and interdependencies among the plurality of engineering objects 108A-N. The plurality of dependency links are then used to create a comprehensive map of the dependencies between the plurality of engineering objects 108A-N, ensuring that each engineering object of the plurality of engineering objects 108A-N is correctly configured and integrated within the engineering project.

A graph-based algorithm is a computational method used to analyze and process data structured as graphs, where nodes represent entities (in this case, engineering objects) and edges represent relationships or dependencies between these entities. Examples of graph-based algorithms include Dijkstra's algorithm for shortest path determination, PageRank for ranking web pages, and the Bellman-Ford algorithm for handling graphs with negative weights. These algorithms are trained using historical data and predefined rules to understand the relationships and dependencies between different objects, ensuring accurate analysis and decision-making.

Dependency links are connections that represent the interdependencies between engineering objects. These links are extracted from the metadata tags, which contain information about how each object interacts with others. For instance, a pump might be dependent on a motor for its operation, and this relationship would be represented as a dependency link in the graph.

The hierarchy in the method is represented by ordering the engineering objects based on their importance, as indicated by the generated weights and dependency links. The graph-based algorithm processes these weights and links to determine the optimal sequence and structure of the objects. For example, in a chemical plant, the hierarchy might start with the primary reactor, followed by heat exchangers, pumps, and control valves, each ordered based on their criticality and dependencies.

The automation module 112 further causes the processing unit 202 to generate a plurality of weights based on the analysis of the one or more metadata tags. The plurality of weights are indicative of an importance of each engineering object of the plurality of engineering objects 108A-N. The automation module 112 further causes the processing unit 202 to apply a graph-based algorithm to the plurality of weights and the plurality of dependency links, to order the plurality of engineering objects according to a significance and interdependencies of the plurality of engineering objects. The ordering forms the hierarchy associated with the engineering project, ensuring that critical and influential engineering objects are prioritized and correctly integrated into an overall design of the engineering project.

The graph-based algorithm is a computational method used to analyze and process data structured as graphs, where nodes represent entities (in this case, the plurality of engineering objects) and edges (in this case, the plurality of dependency links) represent relationships or dependencies between the plurality of engineering objects. Examples of graph-based algorithms include Dijkstra's algorithm for shortest path determination, PageRank for ranking web pages, and the Bellman-Ford algorithm for handling graphs with negative weights. The plurality of graph based algorithms are trained using historical data and predefined rules to understand the relationships and dependencies between the plurality of engineering objects, ensuring accurate analysis and decision-making.

For example, in a power plant, the hierarchy prioritizes engineering objects such as turbines and generators at the top, followed by boilers, cooling systems, and auxiliary equipment, each ordered based on their operational importance and dependencies. Thus, the hierarchy ensures that the engineering project is efficiently organized, minimizing potential issues and enhancing the overall reliability and performance of the industrial plant. By leveraging graph-based algorithms and accurately determining weights and dependency links, the automation module 112 ensures a well-organized and efficient hierarchy for the engineering project.

The automation module 112 further causes the processing unit 202 to generate the plurality of object configurations for the plurality of engineering objects 108A-N. It is noted that the plurality of object configurations are detailed specifications and settings that define how each engineering object should be arranged, connected, and operated within the industrial plant 106.

The plurality of object configurations include parameters such as dimensions, material properties, operational settings, control logic, and safety protocols.

The plurality of object configurations are generated by executing the determined set of low-code models on the one or more metadata tags. Each Low-code model is specialized to optimize the configuration of a specific type of engineering object based on key performance indicators (KPIs) such as efficiency, reliability, safety, and cost-effectiveness. For example, a Low-code model designed for configuring pumps analyzes data related to flow rates, pressure requirements, and energy consumption to generate an optimal configuration that maximizes efficiency and minimizes operational costs.

During execution, the determined set of low-code models process the one or more metadata tags, the plurality of weights and the plurality of dependency links associated with each engineering object. For instance, a Low-code model for heat exchangers might use thermal performance data and fluid dynamics principles to configure the heat exchanger for optimal heat transfer efficiency and minimal pressure drop.

In a practical example, consider a chemical plant where a Low-code model for control valves analyzes data on fluid flow rates, pressure conditions, and chemical compatibility. The Low-code model generates a configuration that specifies the valve type, size, material, and control settings to ensure precise flow regulation and chemical resistance. Similarly, an Low-code model for sensors might analyze environmental conditions and measurement requirements to configure the sensors for accurate and reliable data acquisition.

By executing the determined set of Low-code models, the automation module 112 ensures that each engineering object is configured to meet its specific operational requirements and constraints. The automation module 112 leverages strengths of artificial intelligence to optimize design and integration of the plurality of engineering objects 108A-N, enhancing the overall efficiency, reliability, and safety of the industrial plant.

The method further comprises applying a large language model (LLM) to generate the engineering project based on the plurality of object configurations. The large language model (LLM) is an advanced type of artificial intelligence that uses deep learning techniques to understand and generate human-like text. The LLMs are capable of processing and synthesizing vast amounts of information, making them well-suited for complex tasks such as generating detailed engineering projects.

The LLM is trained on a plurality of training data sets, which include extensive information representative of various industrial plant operations and different types of industrial plants. The training process involves feeding the LLM with a diverse range of documents, technical specifications, operational manuals, historical project data, and industry standards. The LLM learns to recognize patterns, relationships, and dependencies thus enabling the LLM to generate coherent and contextually accurate engineering project documentation.

For example, when generating an engineering project for a power plant, the LLM analyzes a set of object configurations for turbines, generators, boilers, and cooling systems. The LLM uses trained knowledge to generate detailed engineering plans, including layout diagrams, operational protocols, and safety measures. The LLM ensures that all components are correctly integrated and that the project adheres to industry standards and best practices.

By applying a large language model to generate the engineering project, the automation module 112 leverages the advanced capabilities of Al to produce accurate, detailed, and contextually relevant project documentation.

The automation module 112 further causes the processing unit 202 to generate the engineering project based on the plurality of object configurations. The processing unit 202 leverages advanced algorithms and computational techniques to synthesize the plurality of object configurations into the engineering project.

To generate the engineering project, the automation module 112 further causes the processing unit 202 to aggregate the plurality of object configurations, which include detailed specifications and settings for each engineering object of the plurality of engineering objects 108A-N. The automation module 112 further causes the processing unit 202 to organize the plurality of object configurations into a coherent structure, based on the plurality of weights and the plurality of dependency links. Thus, all dependencies and interconnections between the plurality of engineering objects are accurately represented. For example, in a chemical plant, the processing unit 202 integrates configurations for reactors, heat exchangers, pumps, and control valves, ensuring that each component is correctly positioned and connected according to the specified dependencies.

The processing unit 202 employs data integration techniques to compile various elements of the engineering project, such as layout diagrams, wiring schematics, and process flow diagrams. The processing unit 202 is configured to use the one or more metadata tags and plurality of dependency links to ensure that the plurality of engineering objects are correctly aligned and that overall system architecture adheres to industry standards and best practices. For instance, in a power plant, the processing unit 202 generates detailed layout diagrams that show the precise placement of turbines, generators, boilers, and cooling systems, along with their interconnections and control systems.

The automation module 112 further causes the processing unit 202 to generate a simulation instance for the industrial plant 106. A simulation instance is a virtual representation of the industrial plant 106, created to mimic physical and operational characteristics of the industrial plant 106 accurately. The simulation instance is implemented using advanced simulation software that models the plurality of engineering objects 108A-N and the plurality of object configurations 108A-N based on a specification of the generated engineering project.

The simulation instance is generated by inputting the detailed object configurations and dependencies into a simulation software. The simulation software constructs a virtual environment that replicates real-world conditions of the industrial plant, including physical layout, operational parameters, and control systems. For example, in a power plant, the simulation instance would include virtual models of turbines, generators, boilers, and cooling systems, along with their interconnections and control logic.

The automation module 112 further causes the processing unit 202 to simulate a deployment of the generated engineering project in the industrial plant by executing one or more functionalities of the engineering project on the generated simulation instance. Thus, the virtual plant under various operational scenarios to test how the engineering project performs. The simulation software executes the control algorithms, operational protocols, and safety measures defined in the engineering project, allowing for a thorough evaluation of its functionality.
the automation module 112 further causes the processing unit 202 to validate a functionality of the engineering project within the simulation instance. The functionality of the engineering project is validated against a plurality of test cases. Validation is performed by comparing the simulation results with a plurality of predefined test cases that represent typical and extreme operational conditions. Examples of the plurality of predefined test cases include normal operation, startup and shutdown sequences, emergency scenarios, and performance under varying loads and environmental conditions. For instance, in a chemical plant, the plurality of predefined test cases might include scenarios such as a sudden increase in feedstock flow, equipment failure, or a power outage.

The validation process involves monitoring key performance indicators (KPIs) such as efficiency, reliability, safety, and compliance with industry standards. The simulation software generates detailed reports on the performance of the engineering project, highlighting any deviations or issues that need to be addressed. If the project meets all the test case criteria, it is considered successfully validated.

The automation module 112 further causes the processing unit 202 to deploy the engineering project in the industrial plant 106 only after successful validation of the generated engineering project. Deployment involves transferring the validated engineering project from the simulation environment to the actual industrial plant. Deployment includes configuring the physical components, implementing the control systems, and setting up the operational protocols as defined in the project. For example, in a manufacturing plant, deployment would involve installing machinery, setting up control panels, and programming the automation systems according to the validated project specifications.

By generating a simulation instance, simulating the deployment, validating against test cases, and deploying only after successful validation, the automation module 112 ensures a high level of accuracy and reliability in the engineering project. This approach minimizes risks, enhances operational efficiency, and ensures the safety and productivity of the industrial plant.

The storage unit 206 may be a non-transitory storage medi-um configured for storing a database (such as database 118) which comprises server version of the plurality of programming blocks associated with the set of industrial domains.

The communication interface 208 is configured for establishing communication sessions between the one or more client devices 120A-N and the engineering system 102. The communication interface 208 allows the one or more engineering applications running on the client devices 120A-N to import/export one or more engineering projects into the engineering system 102.

In an embodiment, the communication interface 208 inter-acts with the interface at the one or more client devices 120A-N for allowing a plurality of engineers to access the engineering program associated with the engineering project and perform one or more actions on the set of engineering project artifacts 108A-N.

The input-output unit 210 may include input devices a key-pad, touch-sensitive display, camera (such as a camera receiving gesture-based inputs), etc. capable of receiving one or more input signals, such as user commands to process the generated engineering project. Also, the input-output unit 210 may be a display unit for displaying a graphical user interface which visualizes the set of automation templates to the user. The bus 214 acts as inter-connect between the processing unit 202, the memory 204, and the input-output unit 210.

The network interface 212 is configured to handle network connectivity, bandwidth and network traffic between the engineering system 102, the client devices 120A-N and the industrial plant 106.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the pre-sent disclosure.

Those skilled in the art will recognize that, for simplicity and clarity, the full structure and operation of all data processing systems suitable for use with the present disclosure is not being depicted or described herein. Instead, only so much of an engineering system 102 as is unique to the present disclosure or necessary for an understanding of the present disclosure is depicted and de-scribed. The remainder of the construction and operation of the engineering system 102 may conform to any of the various current implementation and practices known in the art.

FIG 3 is a block diagram of an automation module 112, such as those shown in FIG 2, in which an embodiment of the present invention can be implemented. In FIG 3, the automation module 112 comprises a request handler module 302, an object behavior model generation module 304, an analysis module 306, a natural language processing module 308, an engineering object database 310, a validation module 312 and a deployment module 314. FIG. 3 is explained in conjunction with FIG. 1 and FIG. 2.

The request handler module 302 is configured for receiving the request to generate the engineering project for the industrial plant 106. For example, the request is received from one of the one or more users external to the industrial environment 100 via the network 104. In alternative embodiment, the request is received from the one or the one or more client devices 120A-N via the network 104.

The object behavior model generation module 304 is configured for determining the one or more metadata tags for the plurality of engineering object 108A-N.

The analysis module 306 is configured for analyzing the one or more metadata tags to determine the set of low-code models from the plurality of low-code models.

The natural language processing module 308 is configured for extracting the plurality of data items from the one or more metadata tags.

The engineering object database 310 is configured for storing the plurality of metadata tags associated with the plurality of engineering objects 108A-N.

The validation module 312 is configured to generate a simulation instance for the generated engineering project. The validation module 312 is configured to simulate deployment of the generated engineering project in a simulation environment based on the generated simulation instance.

The deployment module 314 is configured for deploying the generated engineering project in the industrial plant 106.

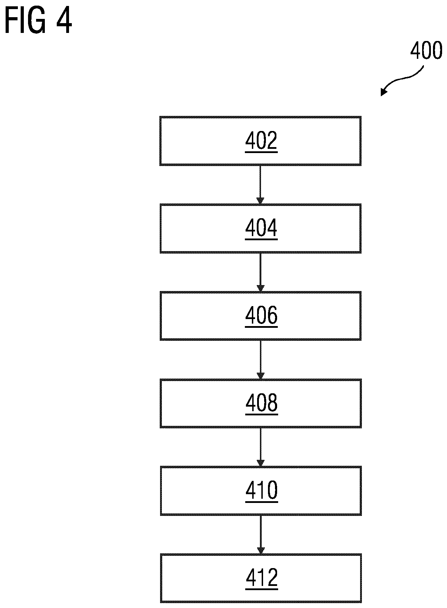

FIG 4 is a process flowchart illustrating an exemplary computer implemented method of automatically generating an engineering project for an industrial plant, according to an embodiment of the present invention. FIG 4 is described in conjunction with FIG 1, 2, and 3.

At step 402, the plurality of engineering objects 108A-N within the industrial plant 106 is determined based on an in-depth analysis of a technical commissioning document, which may include Piping and Instrumentation Diagrams (P&ID), Process Flow Diagrams (PFD), and other relevant technical documentation. The analysis identifies and extracts information about the various engineering objects that are part of the plant's infrastructure.

At step 404, one or more metadata tags associated with the identified engineering objects are determined. From a larger pool of metadata tags, those that are relevant to the plurality of engineering objects 108A-N are selected. The one or more metadata tags contain detailed information about the characteristics, functions, and operational parameters of each engineering object of the plurality of engineering objects 108A-N.

At step 406, a set of low-code models from a plurality of available Low-code models is determined. Each Low-code model in this set is specifically configured to generate object configurations based on the analysis of the determined one or more metadata tags. The selection of Low-code models is tailored to the specific needs and characteristics of the engineering objects.

At step 408, the selected Low-code models are executed to generate a plurality of object configurations for the plurality of engineering objects 108A-N. Each Low-code model analyzes the associated metadata tags and produces detailed configurations that define how each engineering object should be arranged, connected, and operated within the industrial plant 106. The plurality of object configurations include parameters such as dimensions, material properties, operational settings, and control logic.

At step 410, the plurality of object configurations generated by the Low-code models is compiled and organized. The automation module 112 ensures that the plurality of object configurations are coherent and that the dependencies and interconnections between the engineering objects are accurately represented. The configurations are validated to ensure they meet operational requirements, safety standards, and efficiency targets.

At step 412, the complete engineering project is generated based on the plurality of object configurations. The processing unit compiles all the configurations into a comprehensive project document, which includes layout diagrams, wiring schematics, process flow diagrams, operational protocols, and safety measures. This document serves as a detailed blueprint for implementing the engineering project in the industrial plant.

The present invention can take a form of a computer program product comprising program modules accessible from computer-usable or computer-readable medium storing pro-gram code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in meth-od claims may also be apply to system/apparatus claims.

Independent of the grammatical term usage, individuals with male, female or other gender identities are included within the term.

### List of Reference Numerals Document

- **100:**: Industrial environment capable of automatic generation of an engineering project for an industrial plant.
- **102:**: Engineering system.
- **104:**: Network (such as Local Area Network (LAN), Wide Area Network (WAN), Wi-Fi, Internet, any short-range or wide-range communication).
- **106:**: Industrial plant.
- **108A-N:**: Plurality of engineering objects within the industrial plant.
- **120A-N:**: One or more client devices.
- **122A-N:**: Engineering tool provided to each of the one or more client devices.
- **110:**: Platform (such as a cloud computing platform).
- **112:**: Automation module.
- **114:**: Server including hardware resources and an operating system (OS).
- **116:**: Network interface enabling communication between the engineering system, the industrial plant, and the one or more client devices.
- **118:**: Database storing information relating to the industrial plant and the one or more client devices.
- **126:**: Knowledge repository comprising at least one name graph.
- **202:**: Processing unit.
- **204:**: Accessible memory.
- **206:**: Storage unit.
- **208:**: Communication interface.
- **210:**: Input-output unit.
- **212:**: Network interface.
- **214:**: Bus acting as an interconnect between the processing unit, the memory, and the input-output unit.
- **216:**: Integrated development environment (IDE) including the automation module.
- **302:**: Request handler module.
- **304:**: Object behavior model generation module.
- **306:**: Analysis module.
- **308:**: Natural language processing module.
- **310:**: Engineering object database.
- **312:**: Validation module.
- **314:**: Deployment module.
- **402:**: Step of determining a plurality of engineering objects in an industrial plant based on an analysis of a technical commissioning document.
- **404:**: Step of determining, from a plurality of metadata tags, one or more metadata tags associated with the plurality of engineering objects.
- **406:**: Step of determining a set of artificial intelligence (Al) models from a plurality of artificial intelligence models.
- **408:**: Step of generating a plurality of object configurations based on analysis of the one or more metadata tags.
- **410:**: Step of generating the plurality of object configurations for the plurality of engineering objects by execution of the determined set of artificial intelligence models.
- **412:**: Step of generating the engineering project based on the plurality of object configurations.

## Claims

1. A computer implemented method of automatic generation of an engineering project for an industrial plant (106), comprising:
determining a plurality of engineering objects (108A-N) in an industrial plant (106) based on an analysis of a technical commissioning document;
determining, from a plurality of metadata tags, one or more metadata tags associated with the plurality of engineering objects (108A-N);
determining a set of low-code models from a plurality of Low-code models, wherein each low-code model of the plurality of low-code models is configured to generate a plurality of object configurations, based on analysis of the one or more metadata tags; and
generating the plurality of object configurations for the plurality of engineering objects (108A-N), wherein the plurality of object configurations are generated by execution of the determined set of low-code models; and
generating the engineering project based on the plurality of object configurations.

2. The method of claim 1, further comprising:
generating a simulation instance for the industrial plant (106);
simulating a deployment of the generated engineering project in the industrial plant (106) by executing one or more functionalities of the engineering project on the generated simulation instance;
validating the functionality of the engineering project within the simulation instance, wherein the functionality of the engineering project is validated against a plurality of test cases; and
deploying the engineering project in the industrial plant (106) only after successful validation of the generated engineering project.

3. The method of claim 1, wherein determining the set of low-code models comprises:
applying a deep learning model on the determined plurality of engineering objects (108A-N) and the one or more metadata tags associated with the determined plurality of engineering objects (108A-N), wherein the deep learning model is configured to determine the set of low-code models; and
determining the set of low-code models based on the application of the deep learning model.

4. The method according to any of the preceding claims, wherein the technical commissioning documents comprises at least one of a Piping and Instrumentation Diagrams (P&ID), Electrical Schematics, and Process Flow Diagrams (PFD).

5. The method according to any of the preceding claims, wherein generating the plurality of engineering objects (108A-N) from the technical commissioning documents comprises:
extracting a plurality of data items by application of an optical character recognition algorithm on the technical commissioning document;
classifying the extracted plurality of data items into a plurality of categories of engineering objects (108A-N) by implementation of a data classification procedure on the extracted plurality of data items; and
mapping, the categorized plurality of data items to a set of standardized engineering objects (108A-N) to determine the plurality of engineering objects (108A-N) in the industrial plant (106).

6. The method according to any of the preceding claims, wherein generating the plurality of object configurations for the plurality of engineering objects (108A-N) further comprises:
determining a hierarchy associated with the engineering project, wherein the hierarchy and the project model is determined based on an analysis of the one or more metadata tags associated with the plurality of engineering objects (108A-N);
generating the plurality of object configurations based on the determined hierarchy associated with the engineering project.

7. The method of claim 6 wherein determining the hierarchy associated with the engineering project comprises:
generating a plurality of dependency links between the plurality of engineering objects (108A-N) based on an analysis of the one or more metadata tags;
generating a plurality of weights based on the analysis of the one or more metadata tags, wherein the plurality of weights are indicative of each object of the plurality of engineering objects (108A-N), wherein the plurality of weights is generated;
ordering the plurality of engineering objects (108A-N) based on the importance of each object of the plurality of engineering objects (108A-N), by application of a graph-based algorithm on the plurality of weights and the plurality of dependency links; and
determining the hierarchy associated with the engineering project based on the generated graph.

8. The method according to any of the preceding claims, wherein generating the engineering project based on the plurality of object configurations comprises:
applying a large language model (LLM) to generate the engineering project based on the plurality of object configurations, wherein
the large language model is trained on a plurality of training data sets, and the plurality of training data sets comprises information representative of a plurality of industrial plant operations and a plurality of industrial plants (106).

9. An engineering system (102) for automatic generation of an engineering project for an industrial plant (106), wherein the engineering system (102) comprises:
one or more processor(s) (202); and
a memory (204) coupled to the one or more processor(s), wherein the memory (204) comprises an automation module (112) stored in the form of machine-readable instructions executable by the one or more processor(s), wherein the automation module (112) is capable of performing a method according to any of the claims 1-8.

10. An industrial environment (100) comprising:
an engineering system (102) as claimed in claim 9;
a technical installation comprising one or more physical components; and
one or more client devices (120A-N) communicatively coupled to the engineering system (102) via a network (104), wherein the engineering system (102) is configured to perform a method according to any of the claims 1 to 8.

11. A computer-program product, having machine-readable instructions stored therein, that when executed by a processing unit (202), cause the processors to perform a method according to any of the claims 1-8.
